# EUROPEAN PATENT SPECIFICATION

(11) **EP 3 975 152 B1**
(45) Date of publication and mention of the grant of the patent: **08.11.2023**
(21) Application number: 22151544.8
(22) Date of filing: 14.01.2022
(51) Int. Cl.: G08G 1/07

(54) **SIGNAL LIGHT CONTROL METHOD, APPARATUS, AND SYSTEM**
VERFAHREN, VORRICHTUNG UND SYSTEM ZUR SIGNALLICHTSTEUERUNG
PROCÉDÉ, APPAREIL ET SYSTÈME DE COMMANDE DE FEUX DE SIGNALISATION

(30) Priority: 14.05.2021 CN 202110529086
(43) Date of publication of application: 30.03.2022
(73) Proprietor: Apollo Intelligent Connectivity (Beijing) Technology Co., Ltd., Beijing (CN)
(72) Inventor: WANG, Chuang, Beijing (CN); YU, Gao, Beijing (CN); CHEN, Mingzhi, Beijing (CN); ZHANG, Chi, Beijing (CN)
(74) Representative: J A Kemp LLP

(56) References cited:
- CN-A- 102 110 371
- CN-A- 107 705 557

## Description

### TECHNICAL FIELD

The present application relates to the field of intelligent transportation technology in the field of artificial intelligence technology, and in particular to a signal light control method, apparatus and system.

### BACKGROUND

With the widespread application of artificial intelligence technology, the use of intelligent technology to control traffic can provide greater convenience for the travel of vehicles and pedestrians. Signal light control is an important control process in the field of transportation, which may include simulated control of a signal light in a simulated scenario, and control of a signal light in an application scenario, to control the signal light to output light state information.

In prior art, it is necessary to manually read or determine traffic light data (for example, light color, display time), and then input the determined traffic light data into a simulation test device or a controller which controls a signal light.

However, since the traffic light data needs to be determined manually, there is a problem of inaccuracy and time consuming in determining the traffic light data, which leads to a problem of errors and low efficiency in controlling signal lights in accordance with the traffic light data.

CN107705557A discloses a method and a device for road network signal control based on a deep enhancement network, which can comprehensively improve the throughput of the road network, shorten the average travel time of travelers, and save the labor of traffic signal control cost, and realize the fully intelligent upgrade of urban road network dispatching.

### SUMMARY

The invention is set out in the appended set of claims. The present application provides a signal light control method, apparatus and system for improving the reliability of controlling a signal light, respectively according to claims 1, 7, 11.

### BRIEF DESCRIPTION OF DRAWINGS

The drawings are used to better understand the solution, and do not constitute a limitation of the present application, where:
FIG. 1 is a schematic diagram according to a first embodiment of the present application;
FIG. 2 is a schematic scenario diagram of a signal light control method according to an embodiment of the present application;
FIG. 3 is a schematic diagram according to a second embodiment of the present application;
FIG. 4 is a schematic diagram according to a third embodiment of the present application;
FIG. 5 is a schematic diagram according to a fourth embodiment of the present application;
FIG. 6 is a schematic diagram according to a fifth embodiment of the present application;
FIG. 7 is a schematic diagram according to a sixth embodiment of the present application;
FIG. 8 is a block diagram of an electronic device used to implement the signal light control method according to the embodiments of the present application.

### DESCRIPTION OF EMBODIMENTS

Exemplary embodiments of the present application are described below with the drawings, which include various details of the embodiments of the present application to facilitate understanding, and they should be considered as merely exemplary. Similarly, for clarity and conciseness, descriptions of well-known functions and structures have been omitted in the following description.

Control of signal lights is an important control process in the field of transportation. Through the control of traffic signal lights, efficiency of travel can be improved, and safety and reliability of travel can be improved.

The scenario of controlling a signal light may include two types of scenarios, one is a simulated scenario, and the other is an application scenario.

Illustratively, the simulated scenario refers to a scenario of a simulation test built based on an application scenario, and the signal light is controlled in the simulated scenario in a simulated way.

For example, based on a signal light and an intersection in an application scenario, a simulated scenario is obtained in a server virtually, and relevant data (control data used to control the signal light) is input into the server to realize the control of a simulated signal light in the simulated scenario. For example, a simulated signal light is controlled to output a light color (such as red light or green light), or for another example, a simulated signal light is controlled to ouput a countdown of time.

In related technologies, in order to realize the control of a signal light in a simulated scenario, a method usually used includes: downloading traffic lights data from a data provision platform (such as a traffic management platform or a platform of a manufacturer that produces signal lights) by using an intermediate device (such as a computer), and pushing the downloaded traffic lights data in the intermediate device to a simulation test device in a manual way, so that the simulation test device controls the simulated signal light based on the traffic lights data, such as controlling the simulated signal light to output a corresponding light color, etc.

However, combining the intermediate device to push traffic lights data, on the one hand, lacks interaction between the simulation test device and the data provision platform, and a problem of data loss may be caused by abnormal conditions such as failure of the intermediate equipment, thus causing a problem of low accuracy and reliability of the simulation test; on the other hand, because the data obtained is traffic lights data, it is impossible to introduce relevant information of a signal light in the application, such as control strategy data of a signal light, etc., causing that the simulation test is too fixed, and has a large difference from the actual application, and there is a technical problem that the simulation test lacks intuitiveness and reliability.

Illustratively, the application scenario refers to an actual application scenario, such as controlling a signal light which is set at a certain intersection, so that a light head of the signal light outputs a light color, etc.

In relevant technologies, in order to realize the control of a signal light in the application scenario, a method usually used includes: manually determining traffic lights data used to control the signal light, and inputting the traffic lights data into a controller, so that the controller controls the signal light based on the traffic lights data.

However, manual determination of the traffic lights data has a technical problem of low accuracy and time consuming in determining the traffic lights data.

In order to avoid at least one of the above technical problems, the inventors of the present disclosure obtain the inventive concept of the present disclosure through creative efforts: obtaining an association relationship between respective light colors of the light head of each phase (i.e., control-related information) through analyzing control strategy data of the signal light, so as to control the light head to display a light color based on the control-related information.

The present application provides a signal light control method, apparatus, and system, which are a signal light control method, apparatus, and system applied in the field of artificial intelligence technology, to achieve the accuracy and reliability of signal light control.

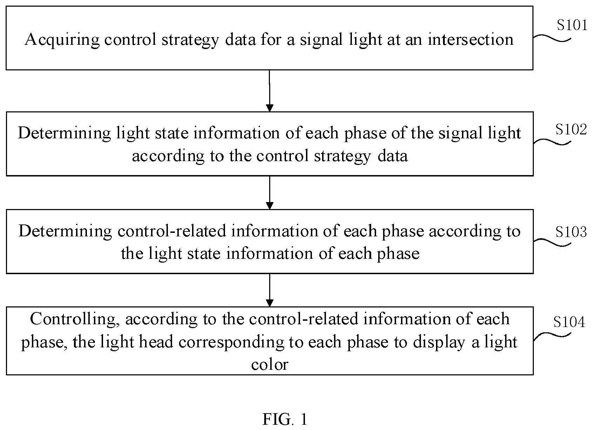

FIG. 1 is a schematic diagram according to a first embodiment of the present application As shown in FIG. 1, the signal light control method provided by the embodiment of the present disclosure includes:
S101: acquiring control strategy data for a signal light at an intersection.

The control strategy data represents a control rule for controlling the signal light, and the signal light has a plurality of light heads.

Illustratively, an executive entity of the present embodiment may be a signal light control apparatus (hereinafter referred to as a control apparatus), and the control apparatus may be a server (including a local server and a cloud server, where the server may be a cloud control platform, a vehicle infrastructure cooperative management platform, a center subsystem, an edge computing platform, a cloud computing platform, etc.), may also be a roadside device, may also be a terminal device, may also be a processor, may also be a chip, etc., which is not limited in this embodiment. The roadside device includes, for example, a roadside sensing device with a computing function, a roadside computing device connected to a roadside sensing device. In a vehicle infrastructure cooperative system architecture of intelligent traffic, the roadside device includes a roadside sensing device and a roadside computing device, and the roadside sensing device (such as a roadside camera) is connected to the roadside computing device (such as a roadside computing unit, RSCU), and the roadside computing device is connected to the server, and the server can communicate with autonomous driving or assisted driving vehicles in various ways; or, if the roadside sensing device itself includes a computing function, the roadside sensing device is directly connected to the server. The above connection may be wired or wireless.

In view of the above analysis, if the signal light control method of the present embodiment is applied to a simulated scenario, the control apparatus may specifically be a simulation test device; if the signal light control method of the present embodiment is applied to an application scenario, the control apparatus may specifically be a controller.

Generally, a plurality of signal lights may be set on an intersection. For example, four signal lights may be set at a crossroads; one signal light has a plurality of light heads, and one light head can display a plurality of colors, such as red, yellow, and green.

For a simulated scenario, this step can be understood as: the simulation test device may determine an intersection which needs to be tested, and obtain the control strategy data of a signal light on the intersection.

One signal light may correspond to one piece of control strategy data or may correspond to different control strategy data at different time periods. That is, the control strategy data of the signal light may be one piece, or be different at different time periods.

For example, since 7:00 to 9:00 is a peak period for work, the traffic flow is relatively high, while the traffic flow from 9:00 to 11:00 is relatively low, so the control strategy data for 7:00 to 9:00 is not the same control strategy data as the control strategy data for 9:00 to 11:00.

It should be understood that the present embodiments do not limit the type of intersection. For example, the intersection may be a crossroads or a T-shaped intersection; the present embodiments do not limit the number of signal lights, and it is possible to control all signal lights at the intersection, or control a part number of signal lights at the intersection, for example, for a simulated scenario, it is possible to control a certain signal light at an intersection, while for an application scenario, it is possible to control each signal light at the intersection.

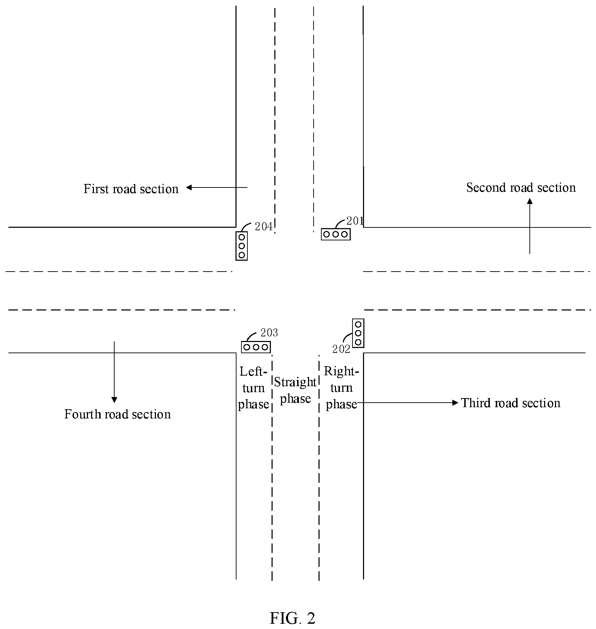

Illustratively, when the signal light control method of the embodiment is aimed at an application scenario, that is, when the signal light control method of the embodiment is used in an application scenario, reference may be made to FIG. 2 for a schematic diagram of the application scenario, which exemplarily shows a scenario where an intersection is a crossroads.

As shown in FIG. 2, the intersection may be composed of a first road section, a second road section, a third road section, and a fourth road section. The first road section and the third road section may be referred to as road sections opposite to each other. The second road section and the fourth road section may be referred to as road sections opposite to each other. A signal light 201 set on the first road section is used to indicate movement of vehicles on the third road section, and a signal light 202 set on the second road section is used to indicate movement of vehicles on the fourth road section. A signal light 203 set on the third road section is used to indicate movement of vehicles on the first road section, and a signal light 204 set on the fourth road section is used to indicate movement of vehicles on the second road section.

In a case of controlling the signal light 201 set on the first road section, this step may be understood as: acquiring the control strategy data of the signal light 201; in a case of controlling the four signal lights on the four road sections, this step may be understood as: acquiring the control strategy data of each of the four signal lights.

S 102: determining light state information of each phase of the signal light according to the control strategy data.

A phase represents a traffic flow of a light head corresponding to the phase within a predetermined time period. The light state information may be understood as information of dimensions such as color, time, phase, etc. of a light head. Traffic lights data (e.g., color and time) is part of the light state information.

In view of the above analysis, an intersection may include a plurality of signal lights, and one signal light may include a plurality of light heads, and one light head corresponds to one phase.

For example, if a light head of a signal light is used to instruct a left-turn traffic flow to proceed or stop, then the phase corresponding to the light head is a left-turn phase.

Specifically, in combination with the schematic diagram of the scenario shown in FIG. 2, if the signal light 201 includes three light heads, one is used to instruct the traffic flow in the left-turn phase, one is used to instruct the traffic flow in the straight phase, and one is used to instruct the traffic flow in the right-turn phase.

S 103: determining control-related information of each phase according to the light state information of each phase.

The control-related information represents an association relationship between respective light colors of a light head corresponding to a phase.

In combination with the above analysis, one phase corresponds to one light head, and one light head has a plurality of light colors, and accordingly, the control-related information of a certain phase may be understood as: an association relationship between a plurality of light colors of the light head corresponding to the phase, for example, an association relationship between the red light and the green light of the light head corresponding to that phase; or, an association relationship between the red light and the yellow light of the light head corresponding to that phase; or, an association relationship between the red light, the green light, and the yellow light of the light head corresponding to that phase.

S104: controlling a light head corresponding to each phase to display a light color according to the control-related information of each phase.

Based on the above analysis, it can be seen that the present embodiment discloses a signal light control method, including: acquiring control strategy data for a signal light at an intersection, where the control strategy data represents a control rule for controlling the signal light and the signal light has a plurality of light heads, determining light state information of each phase of the signal light according to the control strategy data, where a phase represents a traffic flow of a light head corresponding to the phase within a preset time period, determining control-related information of each phase according to the light state information of each phase, where the control-related information represents an association relationship between respective light colors of the light head corresponding to the phase, and controlling the light head corresponding to each phase to display a light color according to the control-related information of each phase. In the present embodiment, the following features are introduced: the light state information is determined based on the control strategy data, and the control-related information is determined based on the light state information, so that the light head of the signal light is controlled to display a light color according to the control-related information. On one hand, it can be avoided that in a simulated scenario, the data used for a simulation test has a low fit with the actual application, the control strategy data of the signal light in the actual application is not considered, which causes the simulation test to be too fixed and have a large gap with the actual application and lack intuitiveness and reliability; and the simulation test is highly fitted to the actual application and the technical effect of improving test flexibility and reliability is achieved. On the other hand, the problem of low accuracy and time-consuming caused by manually determining the traffic lights data and controlling based on the traffic lights data in the application scenario can be avoided, and the technical effect of improving intelligentization of control and improving accuracy and reliability of control is achieved.

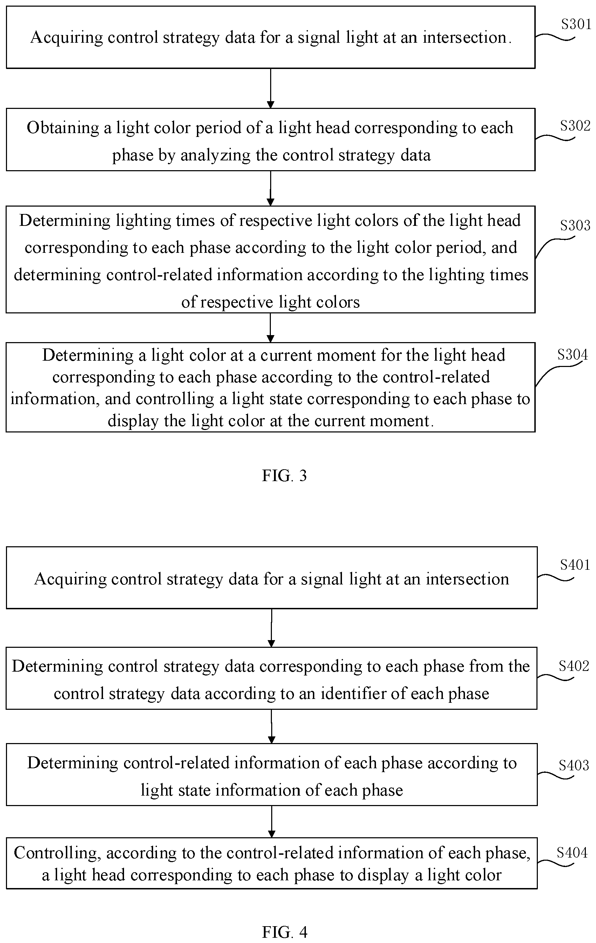

FIG. 3 is a schematic diagram according to a second embodiment of the present application. As shown in FIG. 3, the signal light control method provided by the embodiment of the present disclosure includes:
S301: acquiring control strategy data for a signal light at an intersection.

The control strategy data represents a control rule for controlling the signal light, and the signal light has a plurality of light heads.

Illustratively, for the description of S301, reference may be made to the relevant description of the first embodiment, which will not be repeated here.

In some embodiments, S301 may include: if pre-stored strategy data of the signal light includes optimized strategy data, the optimized strategy data is determined as the control strategy data; if the pre-stored strategy data does not include optimized strategy data, initial strategy data is determined as the control strategy data.

The optimized strategy data is obtained by adjusting the initial strategy data of the intersection based on a historical traveling record of the intersection.

Generally, the initial strategy data is an initialized control rule of a signal light, such as a control rule configured when the signal light leaves the factory, or a control rule assigned to the signal light when the signal light is used for the first time.

The optimized strategy data refers to a control rule which is obtained by adjusting the initial strategy data based on a historical travelling record to meet higher travel demands.

Specifically, the present embodiment may be understood as: the pre-stored strategy data of the signal light may only be the initial strategy data; or, it may include both the initial strategy data and the optimized strategy data.

The control apparatus may determine whether the pre-stored strategy data includes the optimized strategy data and if so, the control apparatus may take the optimized strategy data as the control strategy data, so that the signal light is controlled based on the optimized strategy data; if not, the control apparatus may take the initial strategy data as the control strategy data, so that the signal light is controlled based on the initial strategy data.

It is worth noting that, in this embodiment, by prioritizing the control of the signal light with the optimized control strategy, the control of the signal light can better satisfy travel demands and achieve the technical effect of improving travel efficiency and accuracy.

In addition, when there is no optimized control strategy, by controlling the signal light through the initial control strategy, flexibility and diversity of the control of the signal light can be achieved, and the technical effect of improving the reliability of the control of the signal light can be achieved.

In some other embodiments, the pre-stored strategy data includes the control strategy of the signal light in different time periods (similarly, it may only include the initial control strategy, or it may include both the initial control strategy and the optimized control strategy), and the control apparatus may select the control strategy of a time period to which a current time belongs, based on the current time.

S302: obtaining a light color period of a light head corresponding to each phase, by analyzing the control strategy data.

A phase represents a traffic flow of a light head corresponding to the phase within a preset time period. The light state information of each phase includes the light color period.

Illustratively, for the description of the phase and light state information, reference may be made to the relevant description of the first embodiment, which will not be repeated here.

S303: determining lighting times of respective light colors of the light head corresponding to each phase according to the light color period, and determining the control-related information according to the lighting times of respective light colors.

The control-related information represents an association relationship between respective light colors of the light head corresponding to the phase.

Illustratively, for the description of the control-related information, reference may be made to the relevant description of the first embodiment, which will not be repeated here.

It is worth noting that, in this embodiment, through the analysis of the control strategy data, the light state information -- the light color period, of each phase is obtained, so that the control-related information is determined based on the light color period, and the technical effect of improving efficiency and accuracy of the determined control-related information can be achieved.

In some embodiments, S303 may include the following steps:
A first step: determining switching times between respective light colors and a lighting sequence of respective light colors according to the lighting times of respective light colors.

A switching time represents a moment of switching between two different light colors, such as a moment when a red light is switched to a green light, or a moment when a green light is switched to a yellow light, etc.

The lighting sequence represents a sequence in which different light colors are turned on. For example, if a red light is turned on for 30 seconds and then a green light is turned on, the red light is turned on before the green light in the sequence.

In this step, after determining the lighting times of respective light colors, the control apparatus may calculate based on the lighting times of respective light colors, so as to obtain the switching times between respective light colors and the lighting sequence between respective light colors.

A second step: generating control-related information according to the lighting times of respective light colors, the switching times between respective light colors, and the lighting sequence between respective light colors.

Based on the above analysis, the control apparatus can determine the lighting times of respective light colors, the switching times between respective light colors, and the lighting sequence between respective light colors, and based on the lighting times of respective light colors, the switching times between respective light colors and the lighting sequence between the respective light colors, can determine the association relationship between respective light colors, for example, after a green light is turned on for 1 minute, a red light is turned on, and the red light is turned on for 30 seconds, then a yellow light is turned on, the yellow light is turned on for 5 seconds, and then the green light is turned on, and so on, which will not be further listed here.

It is worth noting that in this embodiment, the control-related information can be generated based on the lighting times of respective light colors, the switching times between the light colors, and the lighting sequence between the light colors, which can achieve a high degree of fit of the control-related information with the light state information, thus making the control-related information have a higher expressiveness for the association relationship between the light colors, and achieving the technical effect that the control-related information has higher accuracy and reliability.

S304: determining a light color at a current moment for the light head corresponding to each phase according to the control-related information, and controlling a light state corresponding to each phase to display the light color at the current moment.

Illustratively, the control apparatus may perform instantiation processing based on the control-related information, so as to realize the control of the light state corresponding to each phase to display the light color at the current moment.

For example, the control apparatus may encapsulate the control-related information into a data structure, for example, "1" indicates the direction of the east entrance, and "2" indicates turning on the green light, etc., and instantiate the data structure in order to display the light color at the current moment.

It is worth noting that, in combination with the above analysis, it can be seen that the control-related information has high accuracy and reliability, therefore, in this embodiment, when the light color of the current moment is displayed for the light state of each phase based on the control-related information, the technical effect of improving accuracy and reliability of the light color display can be achieved.

In some embodiments, the control apparatus may also control the light head of the signal light to display a countdown of time. For example, the control apparatus may determine, according to the control-related information, a countdown of time of the light color at the current time for the light head corresponding to each phase, and control the light head corresponding to each phase to display the countdown of time of the light color at the current time.

Similarly, the control apparatus may perform instantiation processing based on the control-related information, so as to control the light state corresponding to each phase to display the light color and the countdown of time at the current moment.

It is worth noting that, in combination with the above analysis, it can be seen that the control-related information has high accuracy and reliability, and thus, in this embodiment, when the countdown of time of the current moment is displayed for the light state corresponding to each phase based on the control-related information, the technical effect of improving accuracy and reliability in displaying the countdown of time can be achieved, and when the control apparatus controls the display of the light color and the countdown of time, the technical effect of improving diversity and flexibility of controlling the light state can be achieved.

FIG. 4 is a schematic diagram according to a third embodiment of the present application. As shown in FIG. 4, the signal light control method provided by the embodiment of the present disclosure includes:
S401: acquiring control strategy data for a signal light at an intersection.

The control strategy data represents a control rule for controlling the signal light, and the signal light has a plurality of light heads.

Illustratively, for the description of S401, reference may be made to the relevant description of the first embodiment, or the relevant description of the second embodiment, which will not be repeated here.

S402: determining control strategy data corresponding to each phase from the control strategy data according to an identifier of each phase.

Each phase has an identifier, and a phase represents a traffic flow of a light head corresponding to the phase within a preset time period.

In combination the above analysis, one signal light may include a plurality of light heads, and one light head may correspond to one phase, for example, a certain light head of the signal light represents a left-turn phase.

In this embodiment, phases can be distinguished based on their respective identifiers, and the control strategy data of a phase corresponding to an identifier can be determined from the control strategy data through the identifier.

It is worth noting that, in this embodiment, the control strategy data of a phase corresponding to an identifier is determined from the control strategy data by the identifier, through which the technical effect of improving efficiency and accuracy in determining the control strategy data of the phase can be achieved.

S403: determining control-related information of each phase according to light state information of each phase.

The control-related information represents an association relationship between respective light colors of a light head corresponding to a phase.

S404: controlling a light head corresponding to each phase to display a light color according to the control-related information of each phase.

Illustratively, for the description of S403 and S404, reference may be made to the relevant description of the first embodiment, and reference may also be made to the relevant description of the second embodiment, which will not be repeated here.

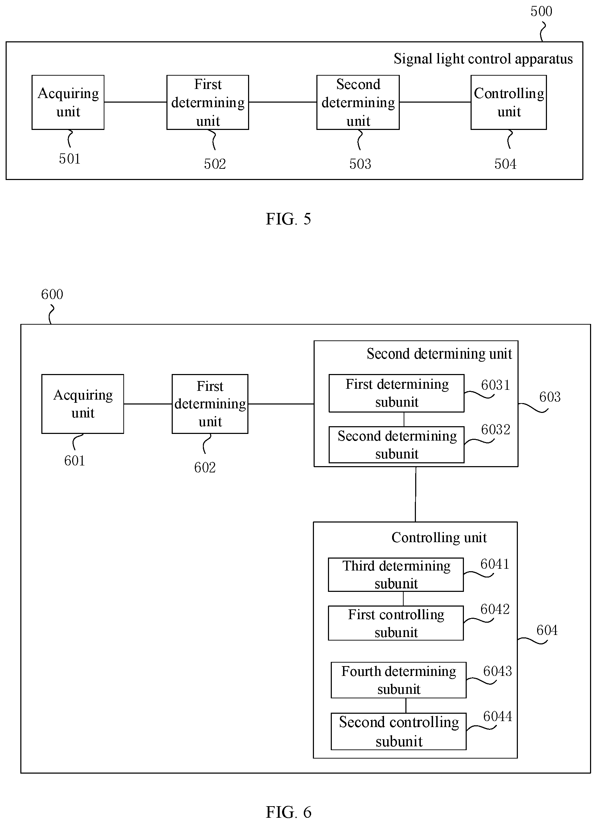

FIG. 5 is a schematic diagram according to a fourth embodiment of the present application. As shown in FIG. 5, the signal light control apparatus provided by the embodiment of the present disclosure includes:
An acquiring unit 501, configured to acquire control strategy data of a signal light at an intersection, where the control strategy data represents a control rule for controlling the signal light, and the signal light has a plurality of light heads.

A first determining unit 502, configured to determine light state information of each phase of the signal light according to the control strategy data, where a phase represents a traffic flow of a light head corresponding to the phase within a preset time period.

A second determining unit 503, configured to determine control-related information of each phase according to the light state information of each phase, where the control-related information represents an association relationship between respective light colors of the light head corresponding to the phase.

A controlling unit 504, configured to control the light head corresponding to each phase to display a light color according to the control-related information of each phase.

FIG. 6 is a schematic diagram according to a fifth embodiment of the present application As shown in FIG. 6, the signal light control apparatus provided by the embodiment of the present disclosure includes:
An acquiring unit 601, configured to acquire control strategy data for a signal light at an intersection, where the control strategy data represents a control rule for controlling the signal light, and the signal light has a plurality of light heads.

In some embodiments, the acquiring unit 601 is configured to, if pre-stored strategy data of the signal light includes optimized strategy data, determine the optimized strategy data as the control strategy data, where the optimized strategy data is obtained by adjusting initial strategy data of the intersection based on a historical travelling record of the intersection.

In some embodiments, the acquiring unit 601 is configured to determine the initial strategy data as the control strategy data if the optimized strategy data is not included in the pre-stored strategy data.

A first determining unit 602, configured to determine light state information of each phase of the signal light according to the control strategy data, where a phase represents a traffic flow of a light head corresponding to the phase within a preset time period.

A second determining unit 603, configured to determine control-related information of each phase according to the light state information of each phase, where the control-related information represents an association relationship between respective light colors of the light head corresponding to the phase.

As can be seen with reference to FIG. 6, in some embodiments, the second determining unit 603 includes:
A first determining subunit 6031, configured to determine lighting times of respective light colors of the light head corresponding to each phase according to a light color period.

A second determining subunit 6032, configured to determine the control-related information according to the lighting times of respective light colors.

In some embodiments, the second determining subunit 6032 includes:
A determining module, configured to determine switching times between respective light colors and a lighting sequence between respective light colors according to the lighting times of respective light colors.

A generating module, configured to generate the control-related information according to the lighting times of respective light colors, the switching times between respective light colors, and the lighting sequence between respective light colors.

A controlling unit 604, configured to control the light head corresponding to each phase to display a light color according to the control-related information of each phase.

As can be seen with reference to FIG. 6, in some embodiments, the controlling unit 604 includes:
A third determining subunit 6041, configured to determine a light color at a current moment for the light head corresponding to each phase according to the control-related information.

A first controlling subunit 6042, configured to control a light state corresponding to each phase to display the light color at the current moment.

A fourth determining subunit 6043, configured to determine, according to the control-related information, a countdown of time of the light color at the current moment for the light head corresponding to each phase.

A second controlling subunit 6044, configured to control the light head corresponding to each phase to display the countdown of time of the light color at the current moment.

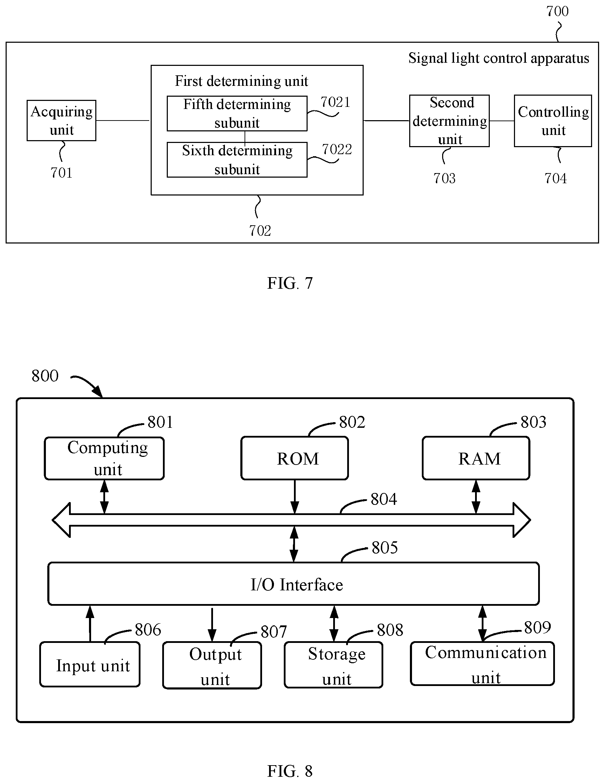

FIG. 7 is a schematic diagram according to a sixth embodiment of the present application. As shown in FIG. 7, the signal light control apparatus provided by the embodiment of the present disclosure includes:
An acquiring unit 701, configured to acquire control strategy data for a signal light at an intersection, where the control strategy data represents a control rule for controlling the signal light, and the signal light has a plurality of light heads.

A first determining unit 702, configured to determine light state information of each phase of the signal light according to the control strategy data, where a phase represents a traffic flow of a light head corresponding to the phase within a preset time period.

In some embodiments, each phase has an identifier; the first determining unit 702 includes:
A fifth determining subunit 7021, configured to determine the control strategy data corresponding to each phase from the control strategy data according to the identifier of each phase.

A sixth determining subunit 7022, configured to determine the light state information of each phase according to the control strategy data corresponding to each phase.

A second determining unit 703, configured to determine control-related information of each phase according to the light state information of each phase, where the control-related information represents an association relationship between respective light colors of the light head corresponding to the phase.

A controlling unit 704, configured to control, according to the control-related information of each phase, the light head corresponding to each phase to display a light color.

According to an embodiment of the present application, the present application also provides an electronic device and a readable storage medium.

According to an embodiment of the present application, the present application also provides a computer program product, the computer program product includes a computer program, the computer program is stored in a readable storage medium, and at least one processor of an electronic device can read the computer program from the readable storage medium, and the at least one processor executes the computer program to cause the electronic device to perform the solution provided by any of the above embodiments.

FIG. 8 illustrates a schematic block diagram of an example electronic device 800 that may be used to implement embodiments of the present application. The electronic device is intended to represent various forms of a digital computers, such as, a laptop, a desktop computer, a workstation, a personal digital assistant, a server, a blade server, a mainframe computer, and other suitable computers. The electronic device may also represent various forms of a mobile devices, such as a personal digital assistant, a cellular phone, a smartphone, a wearable device, and other similar computing devices. The components shown herein, their connections and relationships, and their functions are merely examples, but are not intended to limit the implementation of the present disclosure described and/or claimed herein.

As shown in FIG. 8, the electronic device 800 includes a computing unit 801, which can perform various appropriate actions and processing according to a computer program stored in a read-only memory (ROM) 802 or loaded into a random access memory (RAM) 803 from a storage unit 808. In RAM 803, various programs and data required for the operation of device 800 may also be stored. The computing unit 801, ROM 802, and RAM 803 are connected to each other through a bus 804. An input/output (I/O) interface 805 is also connected to the bus 804.

A plurality of components in the device 800 is connected to the I/O interface 805, including: input unit 806, such as a keyboard, a mouse, etc.; output unit 807, such as various types of monitors, speakers, etc.; a storage unit 808, such as a disk, a CD-ROM, etc.; and a communication unit 809, such as a network card, a modem, a wireless communication transceiver, etc. The communication unit 809 allows the device 800 to exchange information/data with other devices via a computer network such as the Internet and/or various telecommunications networks.

The computing unit 801 may be a variety of general-purpose and/or special-purpose processing components with processing and computing capabilities. Some examples of the computing unit 801 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processors, controllers, microcontrollers, etc. The computing unit 801 performs the various methods and processes described above, for example, the signal light control method. For example, in some embodiments, the signal light control method may be implemented as a computer software program, which is tangibly contained in a machine-readable medium, for example the memory unit 808. In some embodiments, some or all of the computer programs may be loaded and/or installed onto the device 800 via the ROM 802 and/or the communication unit 809. When the computer program is loaded into the RAM 803 and executed by the computing unit 801, one or more steps of the signal light control method as described above may be performed. Alternatively, in other embodiments, the computing unit 801 may be configured to perform the signal light control method by any other appropriate means (e.g., with the aid of firmware).

Various implementations of the systems and techniques described above herein may be implemented in a digital electronic circuit system, an integrated circuit system, a field-programmable gate array (FPGA), an application-specific integrated circuit (ASIC), an application-specific standard product (ASSP), a systems-on-a-chip (SOC), a complex programmable logic device (CPLD), computer hardware, firmware, software, and/or their combinations. These various implementations may include: implementing in one or more computer programs that may be executed and/or interpreted on a programmable system including at least one programmable processor, where the programmable processor may be a special-purpose or general-purpose programmable processor that may receive data and instructions from a storage system, at least one input device, and at least one output device, and transfer data and instructions to the storage system, the at least one input device, and the at least one output device.

Program code for implementing the methods of the present disclosure may be written in any combination of one or more programming languages. The program code may be provided to a processor or controller of a general-purpose computer, a special-purpose computer, or other programmable data processing device so that the program code, when executed by the processor or controller, causes the functions/operations specified in the flowchart and/or block diagram to be implemented. The program code may be executed entirely on a machine or partially on a machine, partially on a machine and partially on a remote machine as stand-alone software packages, or entirely on a remote machine or server.

In the context of the present disclosure, a machine-readable medium may be a tangible medium that may contain or store a program for use by or in conjunction with an instruction-executing system, device, or apparatus. The machine-readable medium may be a machine-readable signal medium or a machine-readable storage medium. The machine-readable medium may include, but are not limited to, an electronic, magnetic, optical, electromagnetic, infrared, or semiconductor system, device, or equipment, or any suitable combination of the above. More specific examples of the machine-readable storage medium would include electrical connections based one or more wires, a portable computer disk, a hard disk, a random access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

In order to provide interaction with a user, the systems and techniques described herein may be implemented on a computer having: a display device (e.g., a cathode ray tube (CRT) or liquid crystal display (LCD) monitor) for displaying information to the user; and a keyboard and pointing device (e.g., a mouse or trackball) through which the user can provide input to the computer. Other types of devices may also be used to provide interaction with the user; for example, feedback provided to the user may be any form of sensory feedback (e.g., visual feedback, auditory feedback, or tactile feedback); and the input from the user may be received in any form (including acoustic input, voice input, or tactile input).

The systems and techniques described herein may be implemented in a computing system including a back-end component (e.g., as a data server), or a computing system including a middleware component (e.g., an application server), or a computing system including a front-end component (e.g., a user computer having a graphical user interface or a web browser through which the user can interact with the implementations of the technologies and the systems described herein), or a computing system including any combination of such back-end component, middleware component, or front-end component. The components of the system may be interconnected via any form or medium of digital data communication (e.g., a communication network). Examples of the communication network include: a local area network (LAN), a wide area network (WAN), and the Internet.

A computer system may include a client and a server. The client and server are generally remote from each other and typically interact over a communication network. The client-server relationship is generated by computer programs that run on corresponding computers and have a client-server relationship with each other. The server may be a cloud server, also known as a cloud computing server or cloud host, which is a hosting product in the cloud computing service system to solve the defects of difficult management and weak business scalability in the traditional physical host and Virtual Private Server (or simply "VPS"). The server may also be a server of a distributed system, or a server incorporating a blockchain.

According to another aspect of embodiments of the present disclosure, an embodiment of the present disclosure also provide a signal light control system, including: a signal light, and a signal light control apparatus as described in any of the above embodiments.

## Claims

1. A signal light control method, comprising:
acquiring (S101) control strategy data for a signal light at an intersection, wherein the control strategy data represents a control rule for controlling the signal light, and the signal light has a plurality of light heads; and determining (S102), according to the control strategy data, light state information of each phase of the signal light,
determining (S103), according to the light state information of said each phase, control-related information of said each phase, wherein the control-related information represents an association relationship between respective light colors of the light head corresponding to the phase; and
controlling (S104), according to the control-related information of said each phase, the light head corresponding to said each phase to display a light color;
wherein determining (S102), according to the control strategy data, the light state information of the each phase of the signal light, comprises:
obtaining (S302) a light color period of the light head corresponding to said each phase by analyzing the control strategy data wherein the light state information of said the each phase includes the light color period;
wherein determining (S103), according to the light state information of said the each phase, the control-related information of said each phase, comprises:
determining (S303) lighting times of respective light colors of the light head corresponding to said each phase according to the light color period, and determining the control-related information according to the lighting times of the respective light colors;
**characterised in that**
acquiring (S101) the control strategy data for the signal light at the intersection, comprises:
if pre-stored strategy data of the signal light includes optimized strategy data, determining the optimized strategy data as the control strategy data; wherein the optimized strategy data is obtained by adjusting initial strategy data of the intersection based on a historical traveling record of the intersection, and the initial strategy data is an initialized control rule of the signal light.

2. The method according to claim 1, wherein determining (S303) the control-related information according to the lighting times of the respective light colors comprises:
determining, according to the lighting times of the respective light colors, switching times between the respective light colors and a lighting sequence between the respective light colors, and generating the control-related information according to the lighting times of the respective light colors, the switching times between the respective light colors, and the lighting sequence between the respective light colors.

3. The method according to claim 2, wherein controlling (S104), according to the control-related information of said each phase, the light head corresponding to said each phase to display a light color, comprises:
determining (S304), according to the control-related information, a light color at the current moment for the light head corresponding to said each phase, and controlling a light state corresponding to said each phase to display the light color at the current moment.

4. The method according to claim 3, further comprising:
determining, according to the control-related information, a countdown of time of the light color at the current moment for the light head corresponding to said each phase, and controlling the light head corresponding to said each phase to display the countdown of time of the light color at the current moment.

5. The method according to any one of claims 1 to 4, wherein said each phase has an identifier; and determining (S102), according to the control strategy data, the light state information of each phase of the signal light, comprises:
determining (S402), from the control strategy data and according to the identifier of said each phase, control strategy data corresponding to said each phase; and
determining (S403) the light state information of said each phase according to the control strategy data corresponding to said each phase.

6. The method according to claim 1, further comprising:
if the pre-stored strategy data does not include optimized strategy data, determining the initial strategy data as the control strategy data.

7. A signal light control apparatus (500), comprising:
an acquiring unit (501), configured to acquire control strategy data of a signal light at an intersection, wherein the control strategy data represents a control rule for controlling the signal light, and the signal light has a plurality of light heads;
a first determining unit (502), configured to determine, according to the control strategy data, light state information of each phase of the signal light,
a second determining unit (503), configured to determine, according to the light state information of said each phase, control-related information of said each phase,
wherein the control-related information represents an association relationship between respective light colors of the light head corresponding to the phase; and
a controlling unit (504), configured to control, according to the control-related information of said each phase, the light head corresponding to said each phase to display a light color;
wherein the first determining unit (502) is further configured to obtain a light color period of the light head corresponding to said each phase by analyzing the control strategy data, wherein the light state information of said each phase includes the light color period;
wherein the second determining unit (503) is further configured to determine lighting times of respective light colors of the light head corresponding to said each phase according to the light color period, and determining the control-related information according to the lighting times of the respective light colors;and
**characterised in that**
the acquiring unit (501) is further configured to determine, if pre-stored strategy data of the signal light includes optimized strategy data, the optimized strategy data as the control strategy data; wherein the optimized strategy data is obtained by adjusting initial strategy data of the intersection based on a historical traveling record of the intersection, and the initial strategy data is an initialized control rule of the signal light.

8. An electronic device, **characterized by** comprising:
at least one processor; and
a memory communicatively connected to the at least one processor;
the memory comprising instructions executable by the at least one processor, to enable the at least one processor to perform the method according to any one of claims 1 to 6.

9. A non-transitory computer readable storage medium having computer instructions stored thereon, **characterized in that**, the computer instructions are arranged to cause a computer to perform the method according to any one of claims 1 to 6.

10. A computer program product including a computer program, **characterized in that**, the computer program is arranged to, when executed by a processor, implement the method according to any one of claims 1 to 6.

11. A signal light control system, **characterized by** comprising: a signal light which is set at an intersection, and an apparatus according to claim 7.

## Patentansprüche

1. Ampelsteuerverfahren, umfassend:
Erfassen (S101) von Steuerstrategiedaten für eine Ampel an einer Kreuzung, wobei die Steuerstrategiedaten eine Steuerregel zur Steuerung der Ampel darstellen und die Ampel eine Vielzahl von Lichtköpfen aufweist; und Bestimmen (S102), gemäß den Steuerstrategiedaten, von Lichtzustandsinformationen jeder Phase der Ampel,
Bestimmen (S103), gemäß den Lichtzustandsinformationen jeder Phase, von steuerungsbezogenen Informationen jeder Phase, wobei die steuerungsbezogenen Informationen eine Assoziationsbeziehung zwischen jeweiligen Lichtfarben des Lichtkopfes darstellen, der der Phase entspricht, und
Steuern (S104), gemäß den steuerungsbezogenen Informationen jeder Phase, des Lichtkopfes, der jeder Phase entspricht, um eine Lichtfarbe anzuzeigen;
wobei das Bestimmen (S102), gemäß den Steuerstrategiedaten, der Lichtzustandsinformationen jeder Phase der Ampel umfasst:
Erhalten (S302) einer Lichtfarbenperiode des Lichtkopfs gemäß jeder Phase durch Analysieren der Steuerstrategiedaten, wobei die Lichtzustandsinformationen jeder Phase die Lichtfarbenperiode enthalten;
wobei das Bestimmen (S103), gemäß den Lichtzustandsinformationen jeder Phase, der steuerungsbezogenen Informationen jeder Phase umfasst:
Bestimmen (S303) der Beleuchtungszeiten der jeweiligen Lichtfarben des Lichtkopfs, die jeder Phase entsprechen, gemäß der Lichtfarbenperiode, und Bestimmen der steuerungsbezogenen Informationen gemäß den Beleuchtungszeiten der jeweiligen Lichtfarben;
**dadurch gekennzeichnet, dass**
das Erfassen (S101) der Steuerstrategiedaten für die Ampel an der Kreuzung umfasst:
wenn vorgespeicherte Strategiedaten der Ampel optimierte Strategiedaten enthalten, Bestimmen der optimierten Strategiedaten als die Steuerstrategiedaten; wobei die optimierten Strategiedaten durch Anpassen der anfänglichen Strategiedaten der Kreuzung basierend auf einer historischen Fahrtaufzeichnung der Kreuzung erhalten werden, und die anfänglichen Strategiedaten eine initialisierte Steuerregel der Ampel sind.

2. Verfahren nach Anspruch 1, wobei das Bestimmen (S303) der steuerungsbezogenen Informationen in Abhängigkeit von den Beleuchtungszeiten der jeweiligen Lichtfarben umfasst:
Bestimmen, gemäß den Beleuchtungszeiten der jeweiligen Lichtfarben, von Schaltzeiten zwischen den jeweiligen Lichtfarben und einer Beleuchtungssequenz zwischen den jeweiligen Lichtfarben, und Erzeugen der steuerungsbezogenen Informationen, gemäß den Beleuchtungszeiten der jeweiligen Lichtfarben, der Schaltzeiten zwischen den jeweiligen Lichtfarben und der Beleuchtungssequenz zwischen den jeweiligen Lichtfarben.

3. Verfahren nach Anspruch 2, wobei das Steuern (S104), gemäß den steuerungsbezogenen Informationen jeder Phase, des Lichtkopfes, der jeder Phase entspricht, um eine Lichtfarbe anzuzeigen, umfasst:
Bestimmen (S304), gemäß den steuerungsbezogenen Informationen, einer Lichtfarbe zum aktuellen Zeitpunkt für den jeder Phase entsprechenden Lichtkopf, und Steuern eines jeder Phase entsprechenden Lichtzustands, um die Lichtfarbe zum aktuellen Zeitpunkt anzuzeigen.

4. Verfahren nach Anspruch 3, das ferner Folgendes umfasst:
Bestimmen, gemäß den steuerungsbezogenen Informationen, eines Countdowns der Zeit der Lichtfarbe zum aktuellen Zeitpunkt für den jeder Phase entsprechenden Lichtkopf, und Steuern des jeder Phase entsprechenden Lichtkopfes, um den Countdown der Zeit der Lichtfarbe zum aktuellen Zeitpunkt anzuzeigen.

5. Verfahren nach einem der Ansprüche 1 bis 4, wobei jede Phase eine Kennung aufweist; und das Bestimmen (S102) der Lichtzustandsinformationen jeder Phase der Ampel nach den Daten der Steuerstrategie umfasst:
Bestimmen (S402), aus den Steuerstrategiedaten und gemäß der Kennung jeder Phase, von Steuerstrategiedaten, die jeder Phase entsprechen; und
Bestimmen (S403) der Informationen über den Lichtzustand jeder Phase gemäß den Steuerstrategiedaten für jede Phase.

6. Verfahren nach Anspruch 1, das ferner Folgendes umfasst:
wenn die vorgespeicherten Strategiedaten keine optimierten Strategiedaten enthalten, Bestimmen der Anfangsstrategiedaten als die Steuerstrategiedaten.

7. Ampelsteuervorrichtung (500), umfassend:
eine Erfassungseinheit (501), die dafür konfiguriert ist, Steuerstrategiedaten einer Ampel an einer Kreuzung zu erfassen, wobei die Steuerstrategiedaten eine Steuerregel zur Steuerung der Ampel darstellen und die Ampel eine Vielzahl von Lichtköpfen aufweist;
eine erste Bestimmungseinheit (502), die dafür konfiguriert ist, gemäß den Steuerstrategiedaten Informationen über den Lichtzustand jeder Phase der Signalampel zu bestimmen,
eine zweite Bestimmungseinheit (503), die dafür konfiguriert ist, gemäß den Lichtzustandsinformationen jeder Phase steuerungsbezogene Informationen jeder Phase zu bestimmen, wobei die steuerungsbezogenen Informationen eine Assoziationsbeziehung zwischen jeweiligen Lichtfarben des Lichtkopfes darstellen, der der Phase entspricht, und
eine Steuereinheit (504), die dafür konfiguriert ist, gemäß den steuerungsbezogenen Informationen der jeweiligen Phase den jeder Phase entsprechenden Lichtkopf zu steuern, um eine Lichtfarbe anzuzeigen;
wobei die erste Bestimmungseinheit (502) ferner dafür konfiguriert ist, eine Lichtfarbenperiode des jeder Phase entsprechenden Lichtkopfes durch Analysieren der Steuerstrategiedaten zu erhalten, wobei die Informationen über den Lichtzustand jeder Phase die Lichtfarbenperiode enthalten;
wobei die zweite Bestimmungseinheit (503) ferner dafür konfiguriert ist, Beleuchtungszeiten jeweiliger Lichtfarben des Lichtkopfs, die jeder Phase entsprechen, gemäß der Lichtfarbenperiode zu bestimmen, und die steuerungsbezogenen Informationen gemäß den Beleuchtungszeiten der jeweiligen Lichtfarben zu bestimmen;und
**dadurch gekennzeichnet, dass**
die Erfassungseinheit (501) ferner dafür konfiguriert ist, wenn vorgespeicherte Strategiedaten der Ampel optimierte Strategiedaten enthalten, die optimierten Strategiedaten als die Steuerstrategiedaten zu bestimmen; wobei die optimierten Strategiedaten durch Anpassen der anfänglichen Strategiedaten der Kreuzung basierend auf einer historischen Fahrtaufzeichnung der Kreuzung erhalten werden, und die anfänglichen Strategiedaten eine initialisierte Steuerregel der Ampel sind.

8. Elektronische Vorrichtung, **dadurch gekennzeichnet, dass** sie umfasst:
mindestens einen Prozessor; und
einen Arbeitsspeicher, der kommunikativ mit dem mindestens einen Prozessor verbunden ist;
wobei der Arbeitsspeicher Anweisungen umfasst, die von dem mindestens einen Prozessor ausgeführt werden können, um den mindestens einen Prozessor in die Lage zu versetzen, das Verfahren nach einem der Ansprüche 1 bis 6 durchzuführen.

9. Nicht-flüchtiges, computerlesbares Speichermedium, auf dem Computerbefehle gespeichert sind, **dadurch gekennzeichnet, dass** die Computerbefehle so ausgelegt sind, dass sie einen Computer veranlassen, das Verfahren nach einem der Ansprüche 1 bis 6 auszuführen.

10. Computerprogrammprodukt, das ein Computerprogramm enthält, **dadurch gekennzeichnet, dass** das Computerprogramm so ausgelegt ist, dass es, wenn es von einem Prozessor ausgeführt wird, das Verfahren nach einem der Ansprüche 1 bis 6 implementiert.

11. Ampelsteuersystem, **dadurch gekennzeichnet, dass** es umfasst: eine Ampel, die an einer Kreuzung aufgestellt ist, und eine Vorrichtung nach Anspruch 7.

## Revendications

1. Procédé de commande de feu de signalisation comprenant :
l'acquisition (S101) de données de stratégie de commande pour un feu de signalisation à une intersection, dans lequel les données de stratégie de commande représentent une règle de commande destinée à commander le feu de signalisation, et le feu de signalisation a une pluralité de têtes de lumière ; et la détermination (S 102), selon les données de stratégie de commande, d'informations d'état de lumière de chaque phase du feu de signalisation,
la détermination (S 103), selon les informations d'état de lumière de chaque dite phase, d'informations relatives à la commande de chaque dite phase, dans lequel les informations relatives à la commande représentent une relation d'association entre des couleurs de lumière respectives de la tête de lumière correspondant à la phase ; et
la commande (S104), selon les informations relatives à la commande de chaque dite phase, de la tête de lumière correspondant à chaque dite phase pour afficher une couleur de lumière ;
dans lequel la détermination (S102), selon les données de stratégie de commande, des informations d'état de lumière de chaque phase du feu de signalisation, comprend :
l'obtention (S302) d'une période de couleur de lumière de la tête de lumière correspondant à chaque dite phase par analyse des données de stratégie de commande dans lequel les informations d'état de lumière de chaque dite phase comportent la période de couleur de lumière ;
dans lequel la détermination (S103), selon les informations d'état de lumière de chaque dite phase, des informations relatives à la commande de chaque dite phase, comprend :
la détermination (S303) de temps d'éclairage de couleurs de lumière respectives de la tête de lumière correspondant à chaque dite phase selon la période de couleur de lumière, et la détermination des informations relatives à la commande selon les temps d'éclairage des couleurs de lumière respectives ;
**caractérisé en ce que** l'acquisition (S101) des données de stratégie de commande pour le feu de signalisation à l'intersection, comprend :
si des données de stratégies pré-stockées du feu de signalisation comportent des données de stratégie optimisées, la détermination des données de stratégie optimisées en tant que données de stratégie de commande ; dans lequel les données de stratégie optimisées sont obtenues par ajustement de données de stratégie initiales de l'intersection sur la base d'un historique de déplacement de l'intersection, et les données de stratégie initiales sont une règle de commande initialisée du feu de signalisation.

2. Procédé selon la revendication 1, dans lequel la détermination (S303) des informations relatives à la commande selon les temps d'éclairage des couleurs de lumière respectives comprend :
la détermination, selon les temps d'éclairage des couleurs de lumière respectives, de temps de commutation entre les couleurs de lumière respectives et d'une séquence d'éclairage entre les couleurs de lumière respectives, et la génération des informations relatives à la commande selon les temps d'éclairage des couleurs de lumière respectives, les temps de commutation entre les couleurs de lumière respectives, et la séquence d'éclairage entre les couleurs de lumière respectives.

3. Procédé selon la revendication 2, dans lequel la commande (S104), selon les informations relatives à la commande de chaque dite phase, de la tête de lumière correspondant à chaque dite phase pour afficher une couleur de lumière, comprend :
la détermination (S304), selon les informations relatives à la commande, d'une couleur de lumière au moment en cours pour la tête de lumière correspondant à chaque dite phase, et la commande d'un état de lumière correspondant à chaque dite phase pour afficher la couleur de lumière au moment en cours.

4. Procédé selon la revendication 3, comprenant en outre :
la détermination, selon les informations relatives à la commande, d'un compte à rebours de temps de la couleur de lumière au moment en cours pour la tête de lumière correspondant à chaque dite phase, et la commande de la tête de lumière correspondant à chaque dite phase pour afficher le compte à rebours de temps de la couleur de lumière au moment en cours.

5. Procédé selon l'une quelconque des revendications 1 à 4, dans lequel chaque dite phase a un identifiant ; et la détermination (S 102), selon les données de stratégie de commande, des informations d'état de lumière de chaque phase du feu de signalisation, comprend :
la détermination (S402), à partir des données de stratégie de commande et selon l'identifiant de chaque dite phase, de données de stratégie de commande correspondant à chaque dite phase ; et
la détermination (S403) des informations d'état de lumière de chaque dite phase selon les données de stratégie de commande correspondant à chaque dite phase.

6. Procédé selon la revendication 1, comprenant en outre :
si les données de stratégie pré-stockées ne comportent pas de données de stratégie optimisées, la détermination des données de stratégie initiales en tant que données de stratégie de commande.

7. Appareil de commande de feu de signalisation (500), comprenant :
une unité d'acquisition (501), configurée pour acquérir des données de stratégie de commande d'un feu de signalisation à une intersection, dans lequel les données de stratégie de commande représentent une règle de commande destinée à commander le feu de signalisation, et le feu de signalisation a une pluralité de têtes de lumière ;
une première unité de détermination (502), configurée pour déterminer, selon les données de stratégie de commande, des informations d'état de lumière de chaque phase du feu de signalisation,
une deuxième unité de détermination (503), configurée pour déterminer, selon les informations d'état de lumière de chaque dite phase, des informations relatives à la commande de chaque dite phase, dans lequel les informations relatives à la commande représentent une relation d'association entre des couleurs de lumière respectives de la tête de lumière correspondant à la phase ; et
une unité de commande (504), configurée pour commander, selon les informations relatives à la commande de chaque dite phase, la tête de lumière correspondant à chaque dite phase pour afficher une couleur de lumière ;
dans lequel la première unité de détermination (502) est en outre configurée pour obtenir une période de couleur de lumière de la tête de lumière correspondant à chaque dite phase par analyse des données de stratégie de commande, dans lequel les informations d'état de lumière de chaque dite phase comportent la période de couleur de lumière ;
dans lequel la deuxième unité de détermination (503) est en outre configurée pour déterminer des temps d'éclairage de couleurs de lumière respectives de la tête de lumière correspondant à chaque dite phase selon la période de couleur de lumière, et déterminer les informations relatives à la commande selon les temps d'éclairage des couleurs de lumière respectives ; et
**caractérisé en ce que**
l'unité d'acquisition (501) est en outre configurée pour déterminer, si des données de stratégies pré-stockées du feu de signalisation comportent des données de stratégie optimisées, les données de stratégie optimisées en tant que données de stratégie de commande ; dans lequel les données de stratégie optimisées sont obtenues par ajustement de données de stratégie initiales de l'intersection sur la base d'un historique de déplacement de l'intersection, et les données de stratégie initiales sont une règle de commande initialisée du feu de signalisation.

8. Dispositif électronique, **caractérisé en ce qu'**il comprend :
au moins un processeur ; et
une mémoire connectée en communication à l'au moins un processeur ;
la mémoire comprenant des instructions exécutables par l'au moins un processeur, pour permettre à l'au moins un processeur de réaliser le procédé selon l'une quelconque des revendications 1 à 6.

9. Support de stockage non transitoire lisible par ordinateur sur lequel sont stockées des instructions d'ordinateur, **caractérisé en ce que**, les instructions d'ordinateur sont agencées pour amener un ordinateur à réaliser le procédé selon l'une quelconque des revendications 1 à 6.

10. Produit programme d'ordinateur comportant un programme d'ordinateur, **caractérisé en ce que**, le programme d'ordinateur est agencé pour, lorsqu'il est exécuté par un processeur, mettre en oeuvre le procédé selon l'une quelconque des revendications 1 à 6.

11. Système de commande de feu de signalisation, **caractérisé en ce qu'**il comprend :
un feu de signalisation qui est placé à une intersection, et un appareil selon la revendication 7.
